# EUROPEAN PATENT SPECIFICATION

(11) **EP 2 025 584 B1**
(45) Date of publication and mention of the grant of the patent: **16.06.2010**
(21) Application number: 08015787.8
(22) Date of filing: 27.07.2001
(51) Int. Cl.: B62D 55/10, B62D 55/04, B62D 55/30

(54) **Frame for track apparatus**
Rahmen für eine Verfolgungsvorrichtung
Cadre pour appareil de suivi

(30) Priority: 28.07.2000 US 627860
(43) Date of publication of application: 18.02.2009
(62) Divisional of application: 01961777.8
(73) Proprietor: ATI, Inc., Mt. Vernon IN 47620 (US)
(72) Inventor: Kahle, Glenn, W., New Franklin, MO 65274 (US); Juncker, Clarence, A., Mt. Vernon, IN 47620 (US); Juncker, David, L., Mt. Vernon, IN 47620 (US); Juncker, Kenneth, J., Mt. Vernon, IN 47620 (US); Juncker, Llyod, E., Mt. Vernon, IN 47620 (US); Reshad, Jamsheed, Newburgh, IN 47630 (US)
(74) Representative: Neath, Susannah Mairi

(56) References cited:
- EP-A- 0 974 510
- WO-A-00/02765
- WO-A-98/04451
- DE-A1- 3 146 511
- GB-A- 818 976
- US-A- 1 388 637
- US-A- 1 774 835
- US-A- 3 869 010
- US-A- 4 448 273
- US-A- 5 829 848

## Description

This invention relates generally to track apparatus for vehicles and, in particular, to frames for track apparatus.

Agricultural vehicles such as tractors, combines and the like are commonly used in agricultural fields for a variety of jobs. Typically, these agricultural vehicles incorporate tires on which the vehicles are supported. Since these types of large agricultural vehicles are quite heavy, the weight of agricultural vehicles are distributed to a relatively small area on the tires of the vehicles. As a result, the tires on the agricultural vehicles tend to compact the soil in the fields. Compacted soil discourages the growth of crops planted in the fields which need loose soil to flourish.

In addition, since agricultural fields are often wet due to rain or watering, agricultural vehicles which enter the fields become bogged down in the mud due to the fact that there is such a small area of the tire in contact with the soil. As such, it is highly desirable to develop a track system for vehicles which disburses the weight of the agricultural vehicle over a larger area so as to reduce the compaction of the soil in the agricultural fields and to provide a track with a larger surface area which contacts the soil so as to prevent the agricultural vehicle from becoming bogged down in mud in the fields.

A prior track system for vehicles is disclosed in United States Patent No. 5,452,949 (Kelderman), assigned to the assignee of the present invention and incorporated herein by reference. The Kelderman '949 patent discloses a track suspension system for a vehicle having a frame and a continuous track. The drive wheel is attached to the frame for engaging and driving the continuous flexible track. The drive wheel has a plurality of drive projections disposed thereon which engage depressions in the rubber track. As the drive wheel rotates, it engages and drives the continuous flexible track.

It has been found that in prior art track systems such as the one disclosed in the Kelderman '949 patent, displacement of the frame during use of the track system may cause excessive stress thereon. Consequently, premature failure of the frame of the track system may result. Further, excessive displacement of the frame may result in a corresponding decrease in the efficiency of the track system during use.

Therefore, it is a primary object and feature of the present invention to provide a track apparatus incorporating a frame of a uni-body construction having minimal displacement during operation thereof.

It is a further object and feature of the present invention to provide a track apparatus incorporating a frame of superior strength and rigidity to prior art frames.

It is a still further object and feature of the present invention to provide a track apparatus incorporating a frame which is inexpensive and simple to manufacture.

A track apparatus including (a) a continuous flexible track having upper and lower lengths and an inner surface, (b) a plurality of wheels engaging the inner surface of the track, including a drive wheel having an upper circumferential portion engaging only a middle portion of the upper length of the track, leading and trailing idler wheels, and at least one bogie wheel engaging only a middle portion of the lower length of the track, and (c) a frame for mounting the wheels, is known from US 4,448,273. The apparatus according to the present invention is characterised in that: the frame has a uni-body construction such that it includes fixed-mounts in fixed relative positions, each fixed-mount defining an axis; the drive wheel is rotatably mounted to one of the fixed-mounts and turns on the respective fixed-mount axis; one of the idler wheels is rotatably mounted to one of the fixed-mounts and turns on the respective fixed-mount axis; the at least one bogie wheel is rotatably mounted to one of the fixed- mounts and turns on the respective fixed-mount axis; and an idler-mounting bracket is pivotably mounted to another of the fixed mounts and pivots on the respective fixed-mount axis, the bracket having an idler-mount defining an idler-mount axis at which the other idler wheel is rotatably mounted in variable positions with respect to the frame.

Preferably the frame defines a lateral recess receiving the drive wheel.

Preferably the frame includes a spindle hub for rotatably receiving an axle of a vehicle therein.

Preferably the fixed-mounts comprise apertures for receiving axles therethrough.

Preferably the trailing idler wheel is rotatably mounted to one of the fixed-mounts and the leading idler wheel is rotatably mounted to the idler-mount. Preferably the trailing idler wheel comprises a pair of axially-aligned wheels and the leading idler wheel comprises a pair of axially- aligned wheels.

Also known from US 4,448,273 is a track apparatus mountable on an rotatable axle of a vehicle, comprising: a continuous flexible track having upper and lower lengths and an inner surface; a drive wheel structure mountable on the axle for rotational movement therewith and having an upper circumferential portion engaging the inner surface of the flexible track along only a middle portion of the upper length; The apparatus according to the present invention is characterised in that it further comprises: a frame of uni-body construction, the frame including a bracket support arm and a trailing-idler support arm, the trailing-idler support arm defining a trailing-idler mount having a trailing-idler rotational axis and the bracket support arm having a terminal end which defines a bracket mount having a bracket pivot axis; a bracket pivotably mounted on the bracket mount so that it pivots on the bracket pivot axis, the bracket having a leading-idler support defining a leading-idler rotational axis; a leading-idler wheel mounted to the leading-idler support and turning on the leading-idler rotational axis, the leading-idler wheel engaging the flexible track; and a trailing-idler wheel mounted to the trailing-idler mount and turning on the trailing-idler rotational axis, the trailing-idler wheel engaging the flexible track.

Preferably the frame includes at least one bogie mount located between the leading-idler mount and trailing-idler mount and having a bogie rotational axis, and further comprising at least one bogie wheel rotatably mounted to the at least one bogie mount and turning on the bogie rotational axis, the at least one bogie wheel engaging only a middle portion of the lower length of the track.

Preferably the frame includes first and second side portions defining a drive wheel receipt well therebetween for receiving the drive wheel.

Preferably each mount comprises a pair of axially aligned apertures, the pair defined by one aperture in the first side portion and one aperture in the second side portion.

Preferably the side portions are connected by cross-members which extend between the side portions adjacent to the paired apertures

Preferably the cross-members are shrouds. Preferably each mount is an axle and each shroud is a sleeve through which a mount passes.

The drawings furnished herewith illustrate a preferred construction of the present invention in which the above advantages and features are clearly disclosed as well as others which will be readily understood from the following description of the illustrated embodiment.
FIGURE 1 is a rear isometric view of a track system for a vehicle incorporating a frame in accordance with the present invention.
FIGURE 2 is a front isometric view showing the track system of FIGURE 1.
FIGURE 3 is a front isometric view of the track system of FIGURE 2 having the flexible track removed therefrom.
FIGURE 4 is a front elevational view of the track system of FIGURE 2.
FIGURE 5 is a front elevational view, partially-in-section, showing a portion of the track system of FIGURE 4.
FIGURE 6 is a schematic view of a belt tensioning device for the track system in a first extended position.
FIGURE 7 is a schematic view of the belt tensioning device for the track system in a second intermediate position.
FIGURE 8 is a schematic view of the belt tensioning device for the track system in a third retracted position.
FIGURE 9 is a graphical representation of the displacement of the belt tensioning device in response to the force thereon.

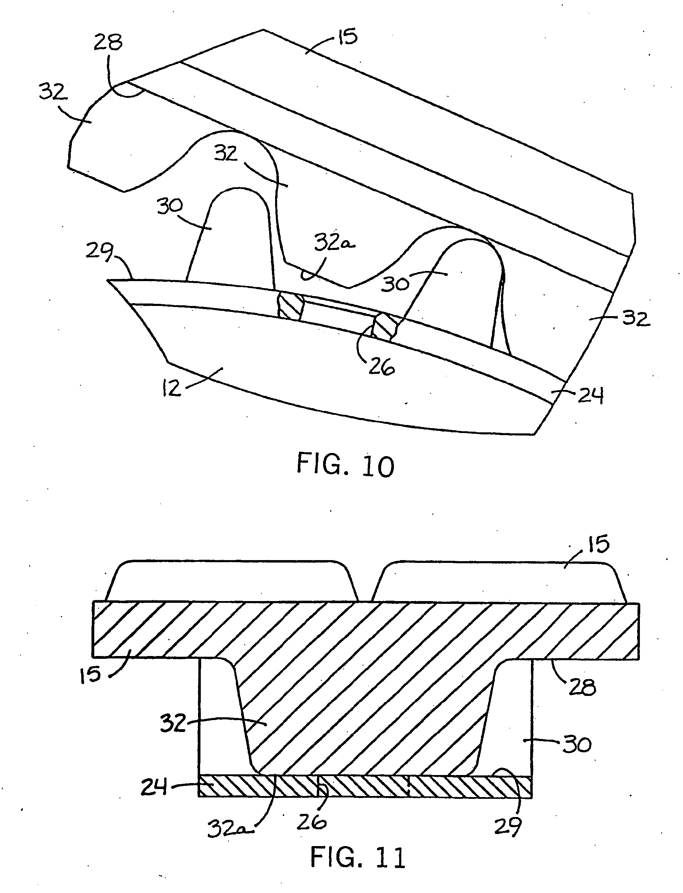

FIGURE 10 is an enlarged, side elevational view, partially-in-section, of a portion of the track system of FIGURE 2 showing engagement of the flexible track with the drive wheel.
FIGURE 11 is a cross-sectional view of a portion of the track system of FIGURE 2 showing engagement of the flexible track with the drive wheel.
FIGURE 12a is a cross-sectional view taken along line 12a-12a of FIGURE 4.
FIGURE 12b is a cross-sectional view taken along line 12b-12b of FIGURE 4.
FIGURE 13 is a rear isometric view of a frame for the track system of FIGURE 1.
FIGURE 14 is a front isometric view of the frame for the track system of FIGURE 2.
FIGURE 15 is a side elevational view of the frame of FIGURE 14.
FIGURE 16 is a cross-sectional view taken along line 16-16 of FIGURE 15.
FIGURE 17 is a front elevational view of the frame of FIGURE 14.
FIGURE 18 is a cross-sectional view taken along line 18-18 of FIGURE 17.
FIGURE 19 is a rear elevational view of the frame of FIGURE 13.

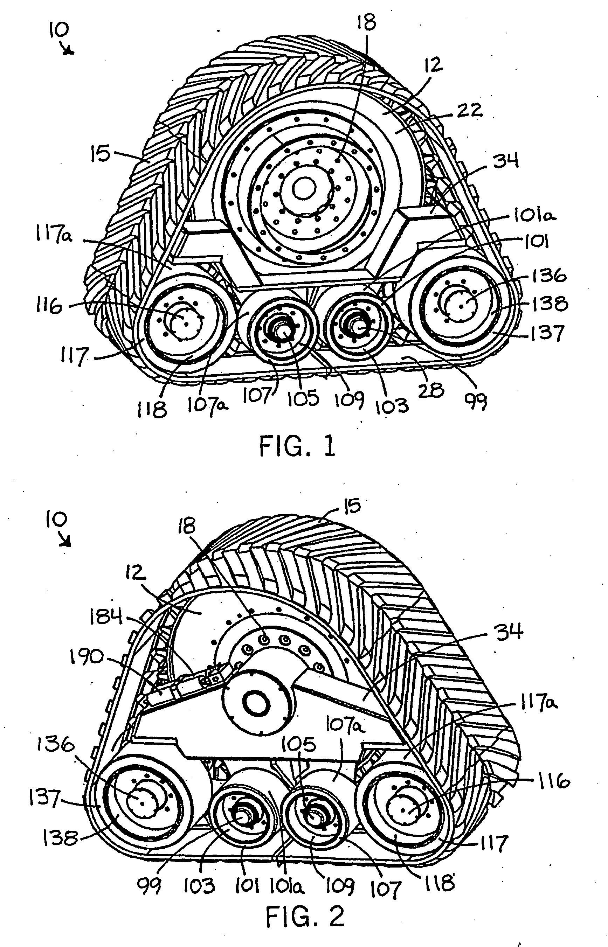

Referring to FIGURES 1-2, a track system is generally designated by the reference numeral 10. In a preferred embodiment, the track system 10 is mounted on an axle (not shown) of an agricultural vehicle such as a tractor or combine. However, it is contemplated as being within the scope of the present invention for track system 10 to be mounted on other types of vehicles such as trucks, automobiles, and the like.

Track system 10 includes a drive wheel 12 which is mountable to the axle of a vehicle for rotational movement therewith in order to drive a flexible track 15. As best seen in FIGURE 1, in the preferred embodiment, it is intended to mount track system 10 to a vehicle having a planetary axle. However, it is contemplated to mount track system 10 to a bar axle or other type of axle without deviating from the scope of the present invention.

Referring to FIGURE 2, drive wheel 12 includes a first set of circumferentially spaced attachment openings 18 therein which are aligned with corresponding openings formed in an attachment flange extending radially from the axle of the vehicle, as is conventional. Bolts extend through attachment openings 18 in drive wheel 12 and through corresponding openings in the attachment flange of the axle and are secured by corresponding nuts threaded on the ends thereof in order to interconnect the axle of the vehicle to drive wheel 12 so as to allow drive wheel 12 to rotate in unison with the axle of the vehicle.

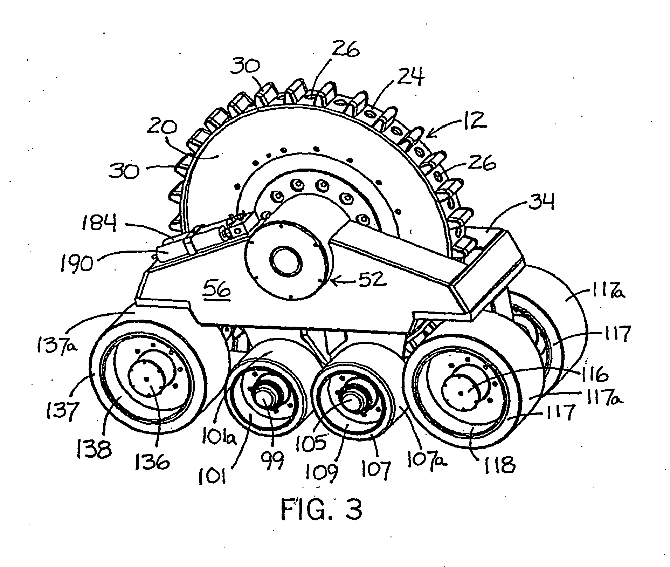

As best seen in FIGURES 1-3, drive wheel 12 includes an inner wall 20 and an outer wall 22 interconnected by a radially outer rim 24. Outer rim 24 includes a plurality of circumferentially spaced openings 26 therein for allowing debris which may accumulate on the inner surface 28 of flexible track 15 to pass therethrough. Outer rim 24 further includes an outer surface 29 having a plurality of circumferentially spaced drive lugs 30 projecting radially therefrom. As hereinafter described, drive lugs 30 are intended to engage corresponding lugs 32 projecting inwardly from the inner surface 28 of flexible track 15 in order to drive flexible track 15.

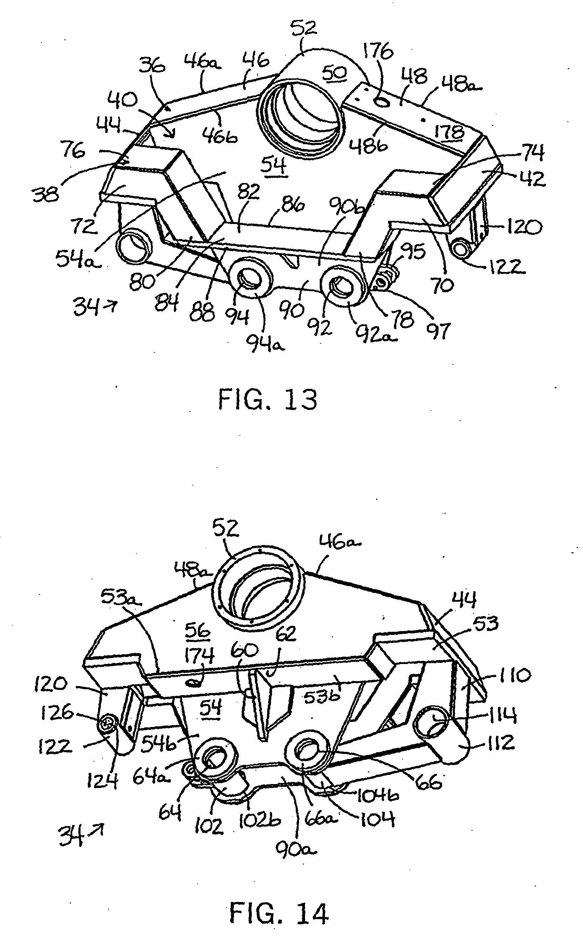

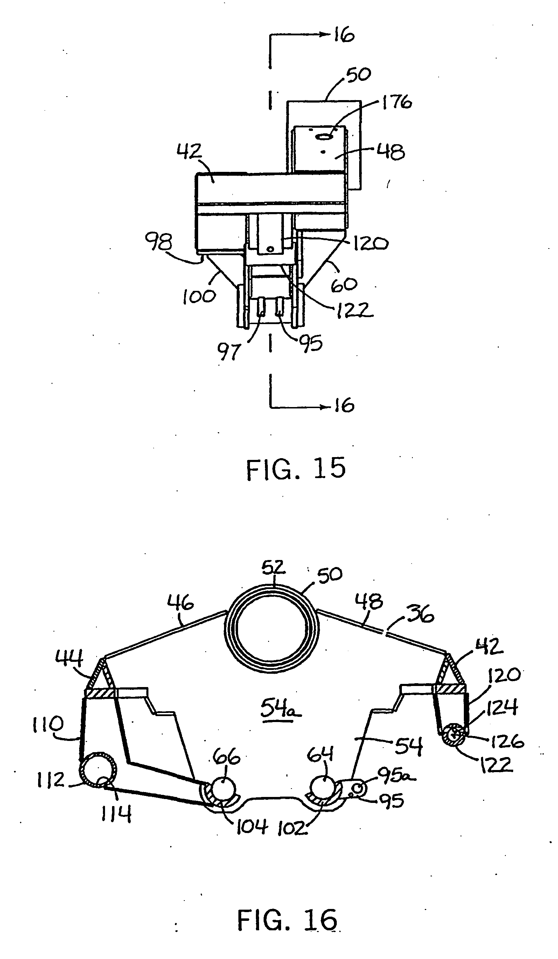

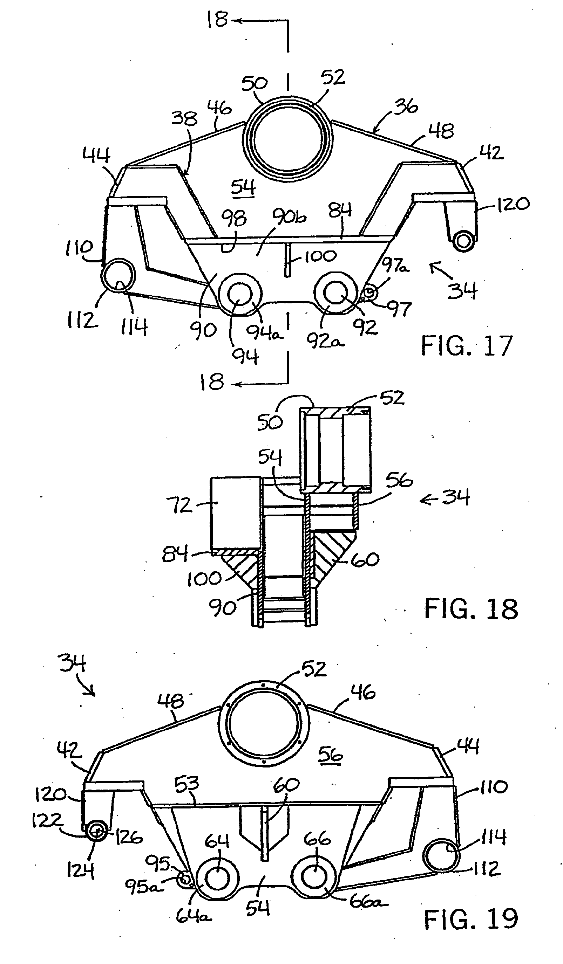

As best seen in FIGURES 13-19, track system 10 further includes frame 34 of a uni-body construction. Frame 34 includes first and second side portions 36 and 38, respectively, which define a drive wheel receipt well 40 therebetween for receiving drive wheel 12. Side portions 36 and 38 of frame 34 are interconnected by front and rear end panels 42 and 44, respectively.

Side portion 36 includes first and second upper panels 46 and 48, respectively, which extend laterally from outer surface 50 of generally tubular spindle hub 52 and a lower panel 53. Side panel 56 interconnects first sides 46a and 48a of upper panels 46 and 48, respectively, and first side 53a of lower panel 53. Side panel 54 projects from second sides 46b and 48b of upper panels 46 and 48, respectively, and is joined to second side 53b of lower panel 53. A support member 60 extends between outer surface 54b of side panel 54 and lower surface 62 of lower panel 53 to add strength and stability to side panel 54 during operation of track system 10. In the preferred embodiment, support member 60 takes the form of a gusset, but other configurations are possible without deviating from the scope of the present invention. Side panel 54 includes leading and trailing apertures 64 and 66, respectively, therethrough for receiving corresponding leading and trailing bogie axles, respectively, as hereinafter described, Reinforcement elements 64a and 66a may be mounted on outer surface 54b of side panel 54 about corresponding apertures 64 and 66, respectively, to reinforce apertures 64 and 66 and prevent deformation of the same by the bogie axles received therein.

Side portion 38 of frame 34 includes generally tubular, forward and rearward arms 70 and 72, respectively. Forward arm 70 includes a first end 74 which is joined to front end panel 42. Similarly, rearward arm 72 includes a first end 76 joined to rear end panel 44. Second ends 78 and 80 of forward and rearward arms 70 and 72, respectively, are interconnected to the upper surface 82 of a generally horizontal base plate 84. Base plate 84 includes an inner edge 86 directed towards drive wheel receipt well 40 and an outer edge 88. Side panel 90 depends from inner edge 86 of base plate 84 and includes leading and trailing apertures 92 and 94, respectively, therethrough for receiving corresponding leading and trailing bogie axles, as hereinafter described. Leading aperture 92 in side panel 90 of side portion 38 is axially aligned with leading aperture 64 in side panel 54 of side portion 36. Likewise, trailing aperture 94 in side panel 90 of side portion 38 is axially aligned with trailing aperture 66 in side panel 54 of side portion 36. Reinforcement elements 92a and 94a may be mounted on outer surface 90b of side panel 90 about corresponding apertures 92 and 94, respectively, to reinforce apertures 92 and 94 and prevent deformation of the same by the bogie axles received therein. Outer surface 90b of side panel 90 of side portion 38 is interconnected to the lower surface 98 of base plate 84 by a support structure 100 to add strength and stability to side panel 90. In the preferred embodiment, support member 100 takes the form of a gusset, but other configurations are possible without deviating from the scope of the present invention.

A leading bogie axle 99 extends through leading aperture 64 in side panel 54 and through leading aperture 92 in side panel 90. Leading bogie wheels 101 are mounted on rims 103, FIGS 1-2, in a conventional manner which, in turn, are mounted on corresponding ends of leading bogie axle 99 in a conventional manner for rotational movement therewith. The outer surfaces 101a of leading bogie wheels 101 engage the inner surface 28 of flexible track 15. Similarly, a trailing bogie axle 105 extends through trailing aperture 66 in side panel 54 and through trailing aperture 94 in side panel 90. Trailing bogie wheels 107 are mounted on rims 109, FIGURES 1-2, in a conventional manner which, in turn, are mounted on opposite ends of trailing bogie axle 105 in conventional manner for rotational movement therewith. The outer surfaces 107a of trailing bogie wheels 107 engage the inner surface 28 of flexible track 15.

Inner surface 54a of side panel 54 of side portion 36 is interconnected to inner surface 90a by leading and trailing bogie axle shrouds 102 and 104, respectively. Leading bogie axle shroud 102 is generally arcuate in shape and has a first end positioned adjacent leading aperture 64 in side panel 54 of side portion 36 and a second opposite end 102b adjacent leading aperture 92 in side panel 90 of side portion 38 so as to partially surround leading bogie axle 99. First and second spaced mounting flanges 95 and 97 project from leading bogie axle shroud 102. Mounting flanges 95 and 97 include corresponding openings 95a and 97a, respectively, therein for reasons hereinafter described. Trailing bogie axle shroud 104 is arcuate in shape and includes a first end positioned adjacent trailing aperture 66 in side panel 54 of side portion 36 and a second end 104b positioned adjacent trailing aperture 94 in side panel 90 of side portion 38 so as to partially surround trailing bogie axle 105.

Frame 34 further includes a trailing idler axle support arm 110 which extends between trailing bogie axle shroud 104 and rear end panel 44. Trailing idler axle support arm 110 includes a generally tubular trailing idler axle support 112 having an inner surface 114 for rotatably supporting trailing idler axle 116. Trailing idler wheels 117 are mounted on rims 118, FIGURES 1-2, in a conventional manner which, in turn, are mounted on corresponding ends of trailing idler axle 116 in a conventional manner for rotational movement therewith. Trailing idler wheels 117 include radially outer surfaces 117a for engaging the inner surface 28 of flexible track 15.

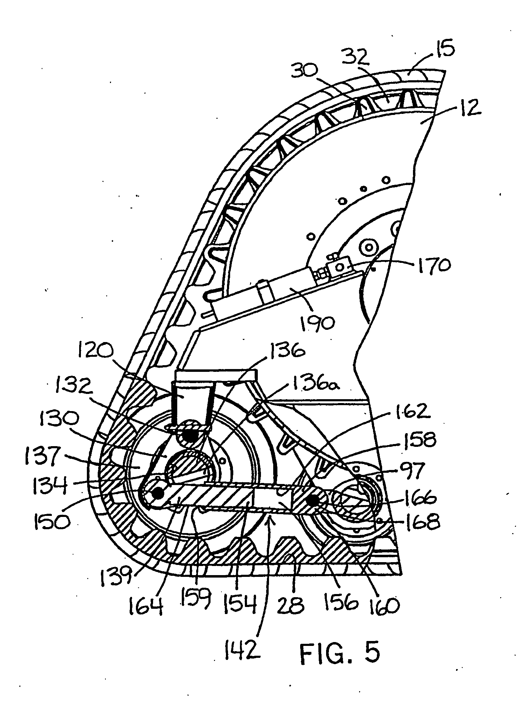

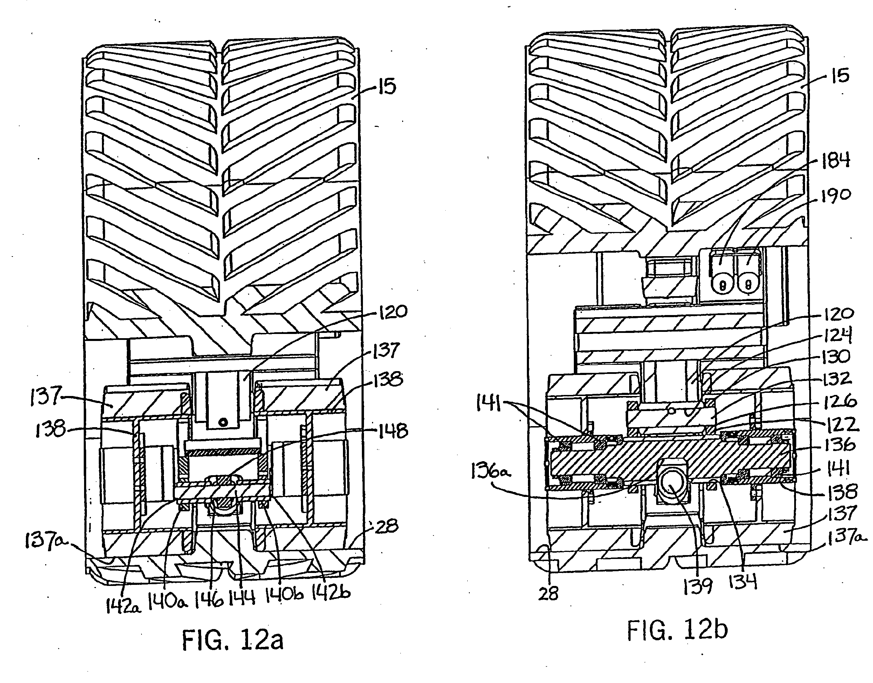

Frame 34 further includes a leading idler axle support arm 120 depending from front endpanel 42. Referring to FIGURES 5 and 12a-12b, leading idler axle support arm 120 has a generally tubular terminal end 122 having an inner surface 124 defining a passageway 126 therethrough. Leading idler axle support 130 is pivotally mounted to leading idler support arm 120 by mounting pin 132 extending through passageway 126 in terminal end 122. Leading idler axle support 130 includes a leading idler axle passageway 134 for allowing leading idler axle 136 to pass therethrough. Leading idler axle 136 includes a notch 136a formed therein for allowing piston shaft 139 of cylinder 142 to extend therepast.

As is conventional, leading idler axle 136 supports leading idler wheels 137 on opposite ends thereof. Leading idler wheels 137 are mounted on rims 138 which, in turn, are mounted on corresponding ends of leading idler axle 136 in a conventional manner for rotational movement therewith. It is contemplated to provide bearings 141 between rims 138 and corresponding ends of leading idler axle 136 to facilitate rotation of leading idler wheels 137 thereabout. Leading idler wheels 137 include a radially outer surface 137a for engaging the inner surface 28 of flexible track 15.

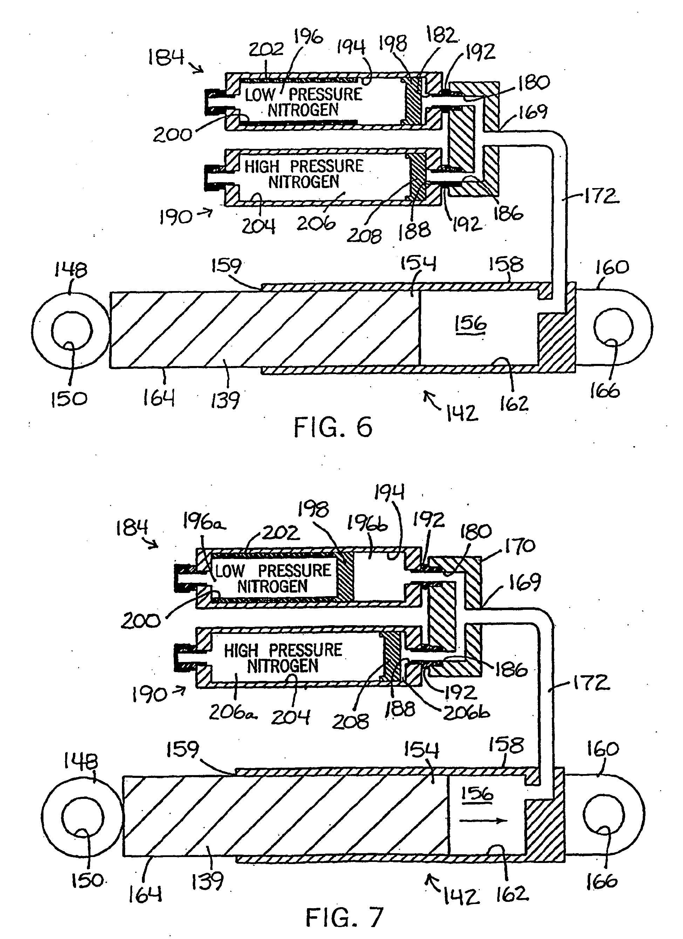

Leading idler axle support 130 further includes a first and second piston mounting ears 140a and 140b depending therefrom. Each mounting ear 140a and 140b includes a corresponding aperture 142a and 142b, respectively, therethrough to accommodate piston shaft mounting pin 144. Apertures 142a and 142b in piston shaft mounting ears 140a and 140b, respectively, are axially aligned. Piston shaft mounting ears 140a and 140b define a piston receipt cavity 146 therebetween for receiving terminal end 148 of piston shaft 139. As best seen in FIGURES 6-8, terminal end 148 of piston shaft 139 includes an opening 150 for receiving mounting pin 144 such that piston shaft 139 of cylinder 142 may pivot on mounting pin 144.

Referring to FIGURES 6-8, piston shaft 139 includes a second opposite end 154 received within chamber 156 within cylinder housing 158 of cylinder 142. Cylinder housing 158 includes a first open end 159 for allowing piston shaft 139 to be inserted within chamber 156 and an opposite closed end 160. Inner surface 162 of cylinder housing 158 forms a slidable interface with the outer surface 164 of piston shaft 139. Closed end 160 of cylinder housing 158 includes a dog ear having an opening 166 passing therethrough. Closed end 160 of cylinder housing 158 is positioned between mounting flanges 95 and 97 such that opening 166 in closed end 160 is aligned with openings 95a and 97a in mounting flanges 95 and 97, respectively. Pin 168 extends through openings 95a and 97a in mounting flanges 95 and 97, respectively, and through opening 166 in closed end 160 of cylinder housing 158 so as to pivotally connect cylinder 142 to frame 34.

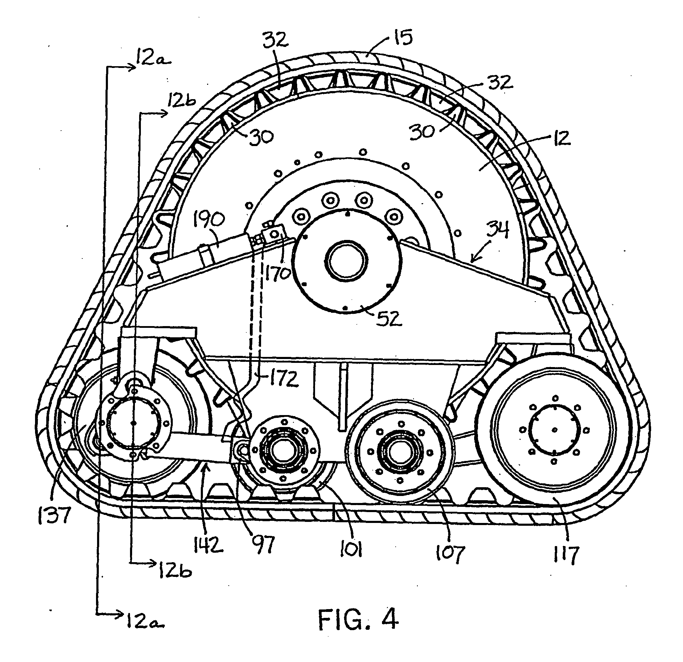

Referring once again to FIGURES 6-8, chamber 156 within cylindrical housing 158 communicates with input 169 of manifold 170 through conduit 172. As best seen in FIGURES 4, 13 and 14, conduit 172 extends through opening 174 in lower panel 53 of side portion 36 of frame 34 and through opening 176 in upper panel 48 of side portion 36 of frame 34. In a preferred embodiment, manifold 170 is mounted to upper surface 178 of upper panel 48. Manifold 170 includes a first output 180 operatively connected to the input 182 of low pressure cylinder 184 and a second output 186 operatively connected to the input 188 of high pressure cylinder 190. Seals 192 are provided between the outputs 180 and 186 of manifold 170 and the inputs 182 and 188 of cylinders 184 and 190, respectively, to maintain the integrity of the connections therebetween.

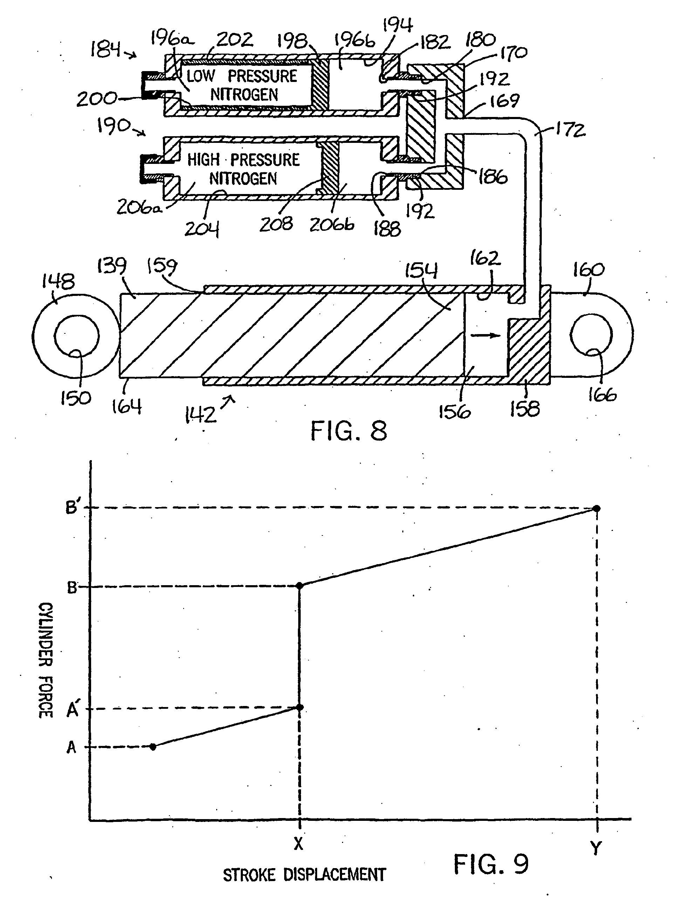

Cylinder 184 includes an inner surface 194 defining a chamber 196 therein. A piston 198 is slidably received within chamber 196 so as to divide chamber 196 into a first portion 196a for receiving low pressure nitrogen gas therein and a second portion 196b which communicates with chamber 156 within cylinder housing 158 through manifold 170 and conduit 172. A generally tubular limiter member 200 is positioned within chamber 196. Limiter member 200 includes an outer surface 202 which engages the inner surface 194 of cylinder 184. Limiter member 200 limits movement of piston 198 such that piston 198 is slidable between a first position, FIGURE 6, and a second position, FIGURES 7 and 8.

Cylinder 190 includes an inner surface 204 defining a chamber 206 therein. A piston 208 is slidably received within chamber 206 so as to divide chamber 206 into a first portion 206a for receiving a high pressure nitrogen gas therein and a second portion 206b which communicates with chamber 156 within cylinder housing 158 through manifold 170 and conduit 172. It is contemplated to provide a fluid within chamber 156 of cylinder housing 158, conduit 172, manifold 170, and second portions 196b and 206b of chambers 196 and 206, respectively, in cylinders 184 and 190, respectively.

As described, as piston shaft 139 moves into chamber 156 of cylinder housing 158, from left to right in FIGURES 6-8, fluid is urged from chamber 156 through conduit 172 into manifold 170. Given that the first portion 196a of chamber 196 of cylinder 184 is filled with a low pressure nitrogen gas and that the first portion 206a of chamber 206 of cylinder 190 is filled with a high pressure nitrogen gas, the fluid within manifold 170 will take the path of least resistance and urge piston 198 within chamber 196 from right to left in FIGURES 6-8 against the bias of the low-pressure nitrogen gas in first portion 196a of chamber 196 in cylinder 184. Travel of piston 198 within chamber 196 is terminated when piston 198 engages limiter member 200, FIGURE 7, which corresponds to a predetermined distance X which piston shaft 139 is inserted into chamber 156 of cylinder housing 158, FIGURE 9. Thereafter, as piston shaft 139 is further inserted into chamber 156 of cylinder housing 158, the fluid within manifold 170 will attempt to urge piston 208 against the force of the high pressure nitrogen gas present in first portion 206a of chamber 206 of second cylinder 190, FIGURE 9.

Referring to FIGURE 9, as described, the amount of force necessary to insert piston shaft 139 a predetermined distance within chamber 156 of cylinder housing 158 gradually increases from an initial value A to an increased value A' as the low pressure nitrogen gas is compressed in first portion 196a of chamber 196 in cylinder 184 by piston 198 being urged from the first to the second position by the fluid. Thereafter, the amount of force necessary to further insert piston shaft 139 a second predetermined distance Y-X within chamber 156 of cylinder housing 158 gradually increases from an initial value B to an increased value B'. Since the nitrogen gas within cylinder 190 is under greater pressure than the nitrogen gas within cylinder 184, a substantially greater force is required for piston shaft 139 to travel the predetermined distance Y-X than the initial predetermined distance X.

In operation, track system 10 is mounted to an axle of a vehicle through drive wheel 12 as heretofore described. The axle of the vehicle is rotated in a conventional manner through the vehicle by its engine and through a transmission which can vary the speeds and allow for forward and reverse rotation. Flexible track 15 of track apparatus 10 is positioned over drive wheel 12 such that lugs 32 projecting from the inner surface 28 of flexible track 15 are received between corresponding pairs of drive lugs 30 projecting from outer surface 29 of outer rim 24 of drive wheel 12. It is intended terminal end surface 32a of such lugs 32 engage outer surface 29 of outer rim 24 of drive wheel in order that lugs 32 are supported when driven by drive wheel 12, thereby minimizing the possible twisting and turning of lugs 32, and hence, damage to lugs 32 during operation of track system 10. As drive wheel 12 rotates, drive lugs 30 engage corresponding lugs 32 and drive flexible track 15 about drive wheel 12. Thereafter, successive drive lugs 30 engage subsequent lugs 32 extending from the inner surface 28 of flexible track 15 so as to drive flexible track 15 about drive wheel 12.

As flexible track 15 approaches leading idler wheels 137, lugs 32 pass therebetween. In addition, the radially outer surfaces 137a of leading idler wheels 137 engage the inner surface 28 of flexible track 15 and direct the lower length of flexible track 15 into contact with a supporting surface such as a farmer's field. As flexible track 15 continues to be driven about drive wheel 12, lugs 32 pass between the pairs of leading and trailing bogie wheels 101 and 107, respectively. As previously described, the radially outer surfaces 101a and 107a of bogie wheels 101 and 107, respectively, engage the inner surface 28 of flexible track 15 along its lower length and insure contact of flexible track 15 with the supporting surface along the lower length of flexible track 15. Similarly, as flexible track 15 approaches trailing idler wheels 117, lugs 32 on the inner surface 28 of flexible track 15 pass therebetween. The radially outer surfaces 117a of idler wheels 117 engage the inner surface 28 of flexible track 15 and guide flexible track 15 onto drive wheel 12 to form a continuous loop.

It is contemplated as being within the scope of the present invention to rotate drive wheel 12 in a second, opposite direction such that trailing idler wheels 117 may function as leading idler wheels, and such that leading idler wheels 137 may function as trailing idler wheels as heretofore described.

In order to maintain the proper tension on flexible track 15 so as to prevent slippage of flexible track during travel about drive wheel 12, piston shaft 139 of cylinder 142 is provided. It is heretofore described, the nitrogen gas in the first portions 196a and 206a of chambers 196 and 206, respectively, of corresponding cylinders 184 and 190, respectively, urge corresponding pistons 198 and 208 towards the first position. As a result, the fluid in chamber 156 of cylinder housing 158 urges piston shaft 139 therefrom. Piston shaft 139, in turn, urges the outer surfaces 137a of leading idler wheels 137 into contact with the inner surface 28 of flexible track 15 through connection with leading idler axle support 130 so as to maintain proper tension on flexible track 15.

In the event that flexible track 15 engages an obstruction on the supporting surface during operation of track system 10, such obstruction may cause flexible track 15 to deflect thereby causing leading idler axle support 130 to pivot on mounting pin 132 and to urge piston shaft 139 into chamber 156 of cylinder housing 158 through leading idler wheels 137 and leading idler axle 136. The amount of force necessary to insert the piston shaft 139 into chamber 156 of cylinder housing 158 (in other words, the amount of force necessary to allow flexible track 15 to deflect) gradually increases as piston shaft 139 is further inserted into chamber 156, as heretofore described. Once track system 10 clears the obstruction, the piston shaft 139 is urged back into its original position by the nitrogen gas in first portions 196a and 206a of chambers 196 and 206, respectively, in corresponding cylinders 184 and 190, respectively, so as to once again provide the proper tension on flexible track 15.

As described, the structure of track system 10 allows for deflection of the flexible track in response to obstructions or the like while maintaining the proper tension thereon. It can be appreciated that the tension on the flexible track may be adjusted by varying the pressure of the nitrogen gas in first portions 196a and 206a of chambers 196 and 206, respectively, in corresponding cylinders 184 and 190, respectively, and/or by varying the position of limiter member 200.

## Claims

1. A track apparatus (10) including (a) a continuous flexible track (15) having upper and lower lengths and an inner surface, (b) a plurality of wheels engaging the inner surface of the track, including a drive wheel (12) having an upper circumferential portion engaging only a middle portion of the upper length of the track (15), leading and trailing idler wheels (137, 117), and at least one bogie wheel (101, 107) engaging only a middle portion of the lower length of the track (15), and (c) a frame (34) for mounting the wheels,
**characterised in that**:
• the frame (34) has a uni-body construction such that it includes fixed-mounts in fixed relative positions, each fixed-mount defining an axis,
• the drive wheel (12) is rotatably mounted to one of the fixed-mounts and turns on the respective fixed-mount axis,
• one of the idler wheels (117) is rotatably mounted to one of the fixed-mounts (112) and turns on the respective fixed-mount axis,
• the at least one bogie wheel (101, 107) is rotatably mounted to one of the fixed-mounts and turns on the respective fixed-mount axis, and
• an idler-mounting bracket (130) is pivotably mounted to another of the fixed mounts (120) and pivots on the respective fixed-mount axis, the bracket having an idler-mount (134) defining an idler-mount axis at which the other idler wheel (137) is rotatably mounted in variable positions with respect to the frame (34).

2. The track apparatus (10) of claim 1 wherein the frame (34) defines a lateral recess (40) receiving the drive wheel (12).

3. The track apparatus (10) of claim 1 or 2 wherein the frame (34) includes a spindle hub (52) for rotatably receiving an axle of a vehicle therein.

4. The track apparatus (10) of claim 1, 2 or 3 wherein the fixed-mounts comprise apertures for receiving axles therethrough.

5. The track apparatus (10) of any preceding claim wherein the trailing idler wheel (117) is rotatably mounted to one of the fixed-mounts and the leading idler wheel (137) is rotatably mounted to the idler-mount (134).

6. The track apparatus (10) of claim 5 wherein the trailing idler wheel (117) comprises a pair of axially-aligned wheels and the leading idler wheel (137) comprises a pair of axially- aligned wheels.

7. A track apparatus (10) mountable on an rotatable axle of a vehicle, comprising:
• a continuous flexible track (15) having upper and lower lengths and an inner surface;
• a drive wheel structure (12) mountable on the axle for rotational movement therewith and having an upper circumferential portion engaging the inner surface of the flexible track (15) along only a middle portion of the upper length; **characterised by**
• a frame (34) of uni-body construction, the frame including a bracket support arm (120) and a trailing-idler support arm (110), the trailing-idler support arm (110) defining a trailing-idler mount (112) having a trailing-idler rotational axis and the bracket support arm (120) having a terminal end (122) which defines
• a bracket (130) pivotably mounted on the bracket mount so that it pivots on the bracket pivot axis, the bracket (130) having a leading-idler support (134) defining a leading-idler rotational axis;
• a leading-idler wheel (137) mounted to the leading-idler support (134) and turning on the leading-idler rotational axis, the leading-idler wheel (137) engaging the flexible track (15); and
• a trailing-idler wheel (117) mounted to the trailing-idler mount (112) and turning on the trailing-idle rotational axis, the trailing-idler wheel (117) engaging the flexible track (15).

8. The track apparatus (10) of claim 7 wherein the frame (34) include at least one bogie mount located between the leading-idler mount and trailing-idler mount (112) and having a bogie rotational axis, and further comprising at least one bogie wheel (101, 107) rotatably mounted to the at least one bogie mount and turning on the bogie rotational axis, the at least one bogie wheel (101, 107) gaging only a middle portion of the lower length of the track (15).

9. The track apparatus (10) of claim 7 or 8 wherein the frame (34) includes first and second side portions (36, 38) defining a drive wheel receipt well (40) therebetween for receiving the drive wheel (12).

10. The track apparatus (10) of claim 9 wherein each mount comprises a pair of axially aligned apertures, the pair defined by one aperture in the first side portion (36) and one aperture in the second side portion (38).

11. The track apparatus (10) of claim 10 wherein the side portions (36, 38) are connected by cross-members which extend between the side portions adjacent to the paired apertures.

12. The track apparatus (10) of claim 11 wherein the cross-members are shrouds.

13. The track apparatus (10) of claim 12 wherein each mount is an axle and each shroud is a sleeve through which a mount passes.

## Patentansprüche

1. Gleiskettenvorrichtung (10) mit (a) einer durchgängigen, flexiblen Gleiskette (15) mit oberen und unteren Längen und einer inneren Oberfläche, (b) einer Anzahl von Rädern, die die innere Oberfläche der Gleiskette beaufschlagen, mit einem Antriebsrad (12) mit einem oberen umfänglichen Abschnitt, der nur einen mittleren Abschnitt der oberen Länge der Gleiskette (15) beaufschlagt, führenden bzw. vorderen und zurückliegenden bzw. hinteren Zwischenrädern (137, 117) und wenigstens einem Laufrad (101, 107), das nur einen mittleren Abschnitt der unteren Länge der Gleiskette (15) beaufschlagt, und (c) einem Rahmen (34) zur Anbringung der Räder, **dadurch gekennzeichnet, dass**:
• der Rahmen (34) eine Konstruktion in Form eines einheitlichen bzw. einzigen Körpers aufweist, so dass er Befestigungshalterungen bzw. befestigte Halterungen an festgelegten relativen bzw. jeweiligen Positionen aufweist, wobei jede Befestigungshalterung eine Achse definiert,
• das Antriebsrad (12) drehbar an einer der Befestigungshalterungen angebracht ist und sich auf der jeweiligen Befestigungshalterungsachse dreht,
• eines der Zwischenräder (177) drehbar an einer der Befestigungshalterungen (112) angebracht ist und sich auf der jeweiligen Befestigungshalterungsachse dreht,
• das wenigstens eine Laufrad (101, 107) drehbar an einer der Befestigungshalterungen angebracht ist und sich auf der jeweiligen Befestigungshalterungsachse dreht, und
• ein Zwischen- bzw. Zwischenradbefestigungsbügel (130), der schwenkbar an eine andere der befestigten Halterungen (120) angebracht ist und auf der jeweiligen Befesti-gungshalterungsachse schwenkt, wobei der Bügel eine Zwischenradhalterung (134) aufweist, die eine Zwischenradhalterungsachse definiert, an der das andere Zwischenrad (137) drehbar in unterschiedlichen bzw. variablen Positionen in Bezug auf den Rahmen (34) angebracht ist.

2. Gleiskettenvorrichtung (10) nach Anspruch 1, bei der der Rahmen (34) eine seitliche Aussparung (40) definiert, die das Antriebsrad (12) aufnimmt.

3. Gleiskettenvorrichtung (10) nach Anspruch 1 oder 2, bei der der Rahmen (34) eine Spindelnabe (52) zur drehbaren Aufnahme einer Fahrzeugachse bzw. -welle in derselben beinhaltet.

4. Gleiskettenvorrichtung (10) nach Anspruch 1, 2 oder 3, bei der die Befestigungshalterungen Öffnungen zur Aufnahme von Achsen durch dieselben aufweisen.

5. Gleiskettenvorrichtung (10) nach einem der vorstehenden Ansprüche, bei der das hintere Zwischenrad (117) drehbar an einer der Befestigungshalterungen angebracht ist und das vordere Zwischenrad (137) drehbar an der Zwischenradhalterung (134) angebracht ist.

6. Gleiskettenvorrichtung (10) nach Anspruch 5, bei der das hintere Zwischenrad (117) ein Paar axial ausgerichteter Räder aufweist und das vordere Zwischenrad (137) ein Paar axial ausgerichteter Räder aufweist.

7. Gleiskettenvorrichtung (10), die an einer drehbaren Achse bzw. Welle eines Fahrzeugs anbringbar ist, mit:
• einer durchgängigen, flexiblen Gleiskette (15) mit oberen und unteren Längen und einer inneren Oberfläche;
• einer Antriebsradstruktur (12), die auf der Achse zur drehbaren Bewegung mit derselben anbringbar ist, und die einen oberen umfänglichen Abschnitt aufweist, der die innere Oberfläche der flexiblen Gleiskette (15) entlang nur eines mittleren Abschnitts der oberen Länge beaufschlagt; **gekennzeichnet durch**
• einem Rahmen (34) mit einer Konstruktion in Form eines einzigen Körpers, wobei der Rahmen einen Bügelträgerarm (120) und einen Trägerarm (110) für ein hinteres Zwischenrad aufweist, wobei der Trägerarm (110) für das hintere Zwischenrad eine Befestigung (112) für ein hinteres Zwischenrad mit einer Drehachse für ein hinteres Zwischenrad definiert, und der Bügelträgerarm (120) ein abschließendes Ende (122) aufweist, welches eine Bügelbefestigung mit einer Bügelschwenkachse definiert;
• einem Bügel (130), der schwenkbar an der Bügelbefestigung angebracht ist, so dass er auf der Bügelschwenkachse schwenkt, wobei der Bügel (130) einem Träger (134) für ein vorderes Zwischenrad aufweist, der eine Drehachse für ein vorderes Zwischenrad definiert;
• ein vorderes Zwischenrad (137), das an dem Träger (134) für das vordere Zwischenrad angebracht ist und sich auf der Drehachse des vorderen Zwischenrads dreht, wobei das vordere Zwischenrad (137) die flexible Gleiskette (15) beaufschlagt; und
• ein hinteres Führungsrad (117), das an der Befestigung (112) für das hintere Zwischenrad angebracht ist und sich auf der Drehachse für das hintere Zwischenrad dreht, wobei das hintere Zwischenrad (117) die flexible Gleiskette (15) beaufschlagt.

8. Gleiskettenvorrichtung (10) nach Anspruch 7, bei der der Rahmen (34) wenigstens eine Lauf- bzw. Laufradbefestigung aufweist, die zwischen der Befestigung für das vordere Zwischenrad und der Befestigung (112) für das hintere Zwischenrad angeordnet ist und eine Laufraddrehachse aufweist, und ferner mit wenigstens einem Laufrad (101, 107) das drehbar an der wenigstens einen Laufradbefestigung angebracht ist und sich auf der Laufraddrehachse dreht, wobei das wenigstens eine Laufrad (101, 107) nur einen mittleren Abschnitt der unteren Länge der Gleiskette (15) beaufschlagt.

9. Gleiskettenvorrichtung (10) nach Anspruch 7 oder 8, bei der der Rahmen (34) erste und zweite Seitenabschnitte (36, 38) aufweist, die zwischeneinander eine Antriebsradaufnahmemulde (40) zur Aufnahme des Antriebsrads (112) definierten.

10. Gleiskettenvorrichtung (10), nach Anspruch 9, bei der jede Befestigung ein paar axial ausgerichteter Öffnungen aufweist, wobei das Paar durch eine Öffnung in dem ersten Seitenabschnitt (36) und eine Öffnung in dem zweiten Seitenabschnitt (38) definiert ist.

11. Gleiskettenvorrichtung (10) nach Anspruch 10, bei der die Seitenabschnitte (36, 38) durch Kreuzelemente verbunden sind, welche sich zwischen dem Seitenabschnitt neben den paarweisen Öffnungen erstrecken.

12. Gleiskettenvorrichtung (10) nach Anspruch 11, bei der die Kreuzelemente Blenden darstellen.

13. Gleiskettenvorrichtung (10) nach Anspruch 12, bei der jede Befestigung eine Achse darstellt und jede Blende eine Hülse darstellt, durch welche eine Achse verläuft.

## Revendications

1. Dispositif à chenille (10) incluant (a) une chenille souple continue (15) ayant des longueurs supérieure et inférieure et une surface intérieure, (b) une pluralité de roues en contact avec la surface intérieure de la chenille, incluant une roue motrice (12) ayant une partie circonférentielle supérieure uniquement en prise avec une partie centrale de la longueur supérieure de la chenille (15), des roues folles avant et arrière (137, 117), et au moins une roue de bogie (101, 107) uniquement en contact avec une partie centrale de la longueur inférieure de la chenille (15), et (c) un châssis (34) pour monter les roues,
**caractérisé en ce que** :
· le châssis (34) a une construction monocorps de telle sorte qu'il inclut des montures fixes dans des positions relatives fixes, chaque monture fixe définissant un axe,
· la roue motrice (12) est montée de manière rotative sur l'une des montures fixes et tourne sur l'axe de monture fixe respectif,
· l'une des roues folles (117) est montée de manière rotative sur l'une des montures fixes (112) et tourne sur l'axe de monture fixe respectif,
· la au moins une roue de bogie (101, 107) est montée de manière rotative sur l'une des montures fixes et tourne sur l'axe de monture fixe respectif, et
· une bride de montage de roue folle (130) est montée de manière pivotante sur une autre des montures fixes (120) et pivote sur l'axe de monture fixe respectif, la bride ayant une monture de roue folle (134) définissant un axe de monture de roue folle sur lequel l'autre roue folle (137) est montée de manière rotative dans des positions variables par rapport au châssis (34).

2. Dispositif à chenille (10) selon la revendication 1, dans lequel le châssis (34) définit un évidement latéral (40) recevant la roue motrice (12).

3. Dispositif à chenille (10) selon la revendication 1 ou 2, dans lequel le châssis (34) inclut un moyeu de fusée (52) pour recevoir de manière rotative un essieu d'un véhicule à l'intérieur de celui-ci.

4. Dispositif à chenille (10) selon la revendication 1, 2 ou 3, dans lequel les montures fixes comportent des ouvertures pour recevoir des essieux à travers celles-ci.

5. Dispositif à chenille (10) selon l'une quelconque des revendications précédentes, dans lequel la roue folle arrière (117) est montée de manière rotative sur l'une des montures fixes et la roue folle avant (137) est montée de manière rotative sur la monture de roue folle (134).

6. Dispositif à chenille (10) selon la revendication 5, dans lequel la roue folle arrière (117) comporte une paire de roues axialement alignées et la roue folle avant (137) comporte une paire de roues axialement alignées.

7. Dispositif à chenille (10) pouvant être monté sur un essieu rotatif d'un véhicule, comportant :
· une chenille souple continue (15) ayant des longueurs supérieure et inférieure et une surface intérieure ;
· une structure de roue motrice (12) pouvant être montée sur l'essieu pour un mouvement de rotation avec celui-ci et
ayant une partie circonférentielle supérieure en prise avec la surface intérieure de la chenille souple (15) uniquement le long d'une partie centrale de la longueur supérieure ; **caractérisé par**
· un châssis (34) de construction monocorps, le châssis incluant un bras de support de bride (120) et un bras de support de roue folle arrière (110), le bras de support de roue folle arrière (110) définissant une monture de roue folle arrière (112) ayant un axe de rotation de roue folle arrière et le bras de support de bride (120) ayant une extrémité terminale (122) qui définit une monture de bride ayant un axe de pivotement de bride ;
· une bride (130) montée de manière pivotante sur la monture de bride de sorte qu'elle pivote sur l'axe de pivotement de bride, la bride (130) ayant un support de roue folle avant (134) définissant un axe de rotation de roue folle avant ;
· une roue folle avant (137) montée sur le support de roue folle avant (134) et tournant sur l'axe de rotation de roue folle avant, la roue folle avant (137) étant en contact avec la chenille souple (15) ; et
· une roue folle arrière (117) montée sur la monture de roue folle arrière (112) et tournant sur l'axe de rotation de roue folle arrière, la roue folle arrière (117) étant en contact avec la chenille souple (15).

8. Dispositif à chenille (10) selon la revendication 7, dans lequel le châssis (34) inclut au moins une monture de bogie située entre la monture de roue folle avant et la monture de roue folle arrière (112) et ayant un axe de rotation de bogie, et comportant en outre au moins une roue de bogie (101, 107) montée de manière rotative sur la au moins une monture de bogie et tournant sur l'axe de rotation de bogie, la au moins une roue de bogie (101, 107) étant uniquement en contact avec une partie centrale de la longueur inférieure de la chenille (15).

9. Dispositif à chenille (10) selon la revendication 7 ou 8, dans lequel le châssis (34) inclut des première et seconde parties latérales (36, 38) définissant un puits de réception de roue motrice (40) entre celles-ci pour recevoir la roue motrice (12).

10. Dispositif à chenille (10) selon la revendication 9, dans lequel chaque monture comporte une paire d'ouvertures axialement alignées, la paire définie par une ouverture dans la première partie latérale (36) et une ouverture dans la seconde partie latérale (38).

11. Dispositif à chenille (10) selon la revendication 10, dans lequel les parties latérales (36, 38) sont reliées par des traverses qui s'étendent entre les parties latérales adjacentes aux ouvertures appariées.

12. Dispositif à chenille (10) selon la revendication 11, dans lequel les traverses sont des enveloppes.

13. Dispositif à chenille (10) selon la revendication 12, dans lequel chaque monture est un essieu et chaque enveloppe est un manchon à travers laquelle passe une montur
